# EUROPÄISCHE PATENTSCHRIFT

(11) **EP 4 076 093 B1**
(45) Veröffentlichungstag und Bekanntmachung des Hinweises auf die Patenterteilung: **11.12.2024**
(21) Anmeldenummer: 20838967.6
(22) Anmeldetag: 18.12.2020
(51) Int. Cl.: A47C 20/04, A47C 31/00, A61G 7/018, G05B 9/02

(54) **ELEKTROMOTORISCHER MÖBELANTRIEB**
ELECTRIC MOTOR-POWERED FURNITURE DRIVE
ENTRAÎNEMENT À MOTEUR ÉLECTRIQUE POUR MEUBLE

(30) Priorität: 20.12.2019 DE 202019107189 U
(43) Veröffentlichungstag der Anmeldung: 26.10.2022
(73) Patentinhaber: DewertOkin Technology Group Co., Ltd., Jiaxing, Zhejiang (CN)
(72) Erfinder: ZANNONI, Luca, Cesena (FC) (IT); PRESEPI, Paolo, Cervia (RA) (IT); FIORE, Simone, San Mauro Pascoli (FC) (IT)
(74) Vertreter: Kleine, Hubertus
(86) Internationale Anmeldenummer: PCT/EP2020/087180
(87) Internationale Veröffentlichungsnummer: WO 2021/123279

(56) Entgegenhaltungen:
- WO-A1-2009/021800
- WO-A1-2014/075882
- WO-A1-2019/145440
- WO-A2-2009/055432
- DE-A1- 102016 109 524
- DE-A1- 19 811 151
- DE-A1- 4 444 762
- DE-B3- 102006 057 680
- DE-U1- 20 213 758
- DE-U1- 202008 018 161
- US-A- 4 075 961
- US-A1- 2003 195 644
- US-A1- 2012 186 019
- US-A1- 2016 081 865
- US-A1- 2016 120 740
- US-A1- 2017 112 716

## Beschreibung

Die Erfindung betrifft einen elektromotorischen Möbelantrieb mit wenigstens einem motorischen Verstellantrieb zur motorischen Verstellung von wenigstens einem Möbelbauteil, wenigstens einer Steuereinheit, die mit einer Motorsteuerung des wenigstens einen Verstellantriebs verbunden ist, und wenigstens einer Bedieneinheit zur Bedienung des wenigstens einen Verstellantriebs, wobei die Steuereinheit abhängig von der Betriebssituation des elektromotorischen Möbelantriebs zum Ansteuern, zum Stillsetzen und/oder zum zeitweise Umkehren einer Drehrichtung mindestens eines Motors des wenigstens einen Verstellantriebs ausgelegt ist, wobei der mindestens eine Motor als bürstenbehafteter Gleichstrommotor ausgebildet ist.

In der Praxis kommen derartige Möbelantriebe beispielsweise bei Arbeitstischen oder bei Funktionsmöbels wie Sesseln oder Sofas zum Einsatz. Auch Betten oder Lifter, wie auch Patientenlifter sind mögliche Einsatzobjekte eines derartigen Möbelantriebs. Dabei können Betriebssituationen in Form von Überbelastung oder in Form von drohender Gefährdung von Personen oder Gegenständen durch beispielsweise Einklemmen vorliegen, wenn sich Personen oder Gegenstände in einem Gefahrenbereich befinden und ein Gefahrenpotential durch den Bediener nicht erkannt wird.

Im Stand der Technik sind Möbelantriebe mit einer Steuereinheit bekannt, die abhängig der Betriebssituation in den Verstellvorgang eingreifen. Oft werden dabei eine Erhöhung des Motorstroms oder eine Reduzierung der Motorspannung detektiert und die Betriebssituation beispielsweise in Form eines Einklemmfalls daraus abgeleitet. Sodann wird in solch einem Einklemmfall der zur Verstellfunktion zugeordnete Motor zumindest abgeschaltet, möglicherweise auch für eine kurze Zeit umgesteuert.

Zur Detektion eines Anstiegs des Motorstroms nutzt der Stand der Technik entsprechende Sensoren oder Shunts, wie z.B. in der Druckschrift DE 44 44 762 A1 offenbart ist. Alternativ sind im Stand der Technik, beispielsweise aus der Schrift DE 10 2016 109 524 A1, Erschütterungs- und Beschleunigungssensoren oder Piezosensoren beschrieben, die mit dem Verstellantrieb oder mit einem beweglichen Möbelbauteil mechanisch gekoppelt sind und ein hartes Hindernis während des Verstellvorgangs erkennen. Derartige Sensoren haben sich bewährt, ihre Nutzung erfordert jedoch einen erheblichen Mehraufwand an Montage und Materialeinsatz, da in dem jeweiligen Verstellantrieb eine Leiterplatte mit entsprechender Bestückung und Verdrahtung nach Außen zum Anschluss an die Steuereinheit erforderlich ist. Als weitere Alternative ist aus der Druckschrift WO 2019/145440 A1 ein sprachgesteuerter Einklemmschutz bekannt, bei dem eine Abschaltung von Möbelantrieben erfolgt, wenn bestimmte Schlüsselwörter, die auf eine Not- oder Gefahrenfall hindeuten, erkannt werden.

Die Erkennung mit zusätzlichen Sensoren ist gegenüber der Auswertung der Höhe des Motorstroms zuverlässiger, sie verkompliziert jedoch den Aufbau und die Montage des elektromotorischen Möbelantriebs.

Aufgabe der vorliegenden Erfindung ist es, eine gegenüber der Auswertung der Höhe des Motorstroms verbesserte und dennoch leicht zu montierende Anordnung zu schaffen.

Diese Aufgabe wird durch einen elektromotorischen Möbelantrieb mit den Merkmalen des Anspruchs 1 gelöst.

Dabei ist vorgesehen, dass die Steuereinheit dazu ausgebildet ist, eine Frequenz eines erzeugten Gegen-EMK-Signals des mindestens einen Motors auszuwerten. Da der Motor des Verstellantriebs als Gleichstrommotor mit Bürsten ausgebildet ist, erzeugt er ein Gegen-EMK (elektromotorische Kraft)-Signal, aus dem seine Drehgeschwindigkeit ableitbar ist. Erfindungsgemäß wird dieses Signal genutzt, um einen Abfall der Drehgeschwindigkeit zu erkennen, die auf eine Kollision bzw. einen Einklemmfall hindeutet.

Dieses Gegen-EMK-Signal spiegelt die Drehzahl des Motors zuverlässiger wider als die Auswertung der Höhe des Motorstroms. Das Gegen-EMK-Signal kann dennoch auf unaufwändige Weise aus einer Messung des Motorstroms gewonnen werden, so dass keine zusätzliche Sensorik erforderlich ist, die den Aufbau des elektromotorischen Möbelantriebs verkomplizieren würde.

Die ausgewerteten Signale liegen, da sie durch den Motor selbst erzeugt werden, an dessen Anschlüssen vor. Da die Anschlussleitung des Motors als zweiadrige Leitung ausgebildet ist, können standardisierte Motore verwendet werden und zugleich kann vorteilhafterweise auf Signalleitungen parallel zu den Motorleitungen verzichtet werden. Das spart Montageaufwand und Werkstoffressourcen. Der Motor selbst ist als bürstenbehafteter Gleichstrommotor mit Permanenterregung ausgebildet. Die typische Betriebsspannung liegt unter 40 Volt.

In direkter Abhängigkeit der Drehzahl des Motors erfolgt die Erzeugung der Gegen-EMK, welche als wechselndes oder schwellendes Spannungssignal mit einer Frequenz vorliegt und durch die Steuereinheit auswertbar ist. Die Steuereinheit ist dazu ausgelegt, die Frequenz dieses wechselnden bzw. schwellenden Spannungssignals auszuwerten.

Die Steuereinheit ist erfindungsgemäß dazu ausgelegt, einen Soll-Ist-Vergleich durchzuführen, sowie einen Schaltvorgang auszuführen, wenn die Frequenz des Signals einen vorbestimmten Schwellenwert unterschreitet und/oder wenn ein Absolutwert der Änderung der Frequenz pro Zeiteinheit einen vorbestimmten Schwellenwert überschreitet.

In einer vorteilhaften Ausführung kann der Soll-Ist-Vergleich auch ereignisbezogen sein. Ferner kann der Schwellenwert als variabler Schwellenwert im Rahmen vorbestimmter Grenzen ereignisbezogen ausgebildet sein.

Fällt die Frequenz beispielsweise unterhalb eines zuvor festgelegten und vorbestimmten Schwellenwertes, kann dies als Überbelastung des Verstellantriebs bewertet werden, was zu einer Abschaltung des jeweiligen Motors führt. Dabei kann der vorbestimmte Schwellenwert fest einprogrammiert sein, oder sich an Ereignissen orientieren, beispielsweise an der Versorgungsspannung, oder situationsbezogen gewählt werden. Beispielsweise kann eine Anfahrsituation von einer Weiterfahrsituation unterschieden werden.

Alternativ oder zusätzlich vollzieht die Steuereinheit eine Auswertung der eingangs genannten Frequenz in Abhängigkeit der Zeit. Ändert sich die ausgewertete Frequenz innerhalb einer vorbestimmten Zeitspanne um einen vorbestimmten Wert, kann dies als Einklemmfall bewertet werden. Der jeweilige Motor wird daraufhin abgeschaltet und/oder kann in einer Variante zusätzlich für eine kurze Dauer in der anderen Drehrichtung betrieben werden.

Die Steuereinheit ist mit einer Motorsteuerung gekoppelt oder mit dieser integriert ausgeführt. Die Motorsteuerung umfasst mechanische oder elektromechanische Schalter zum Ein- und Ausschalten des jeweiligen Motors. Es kommen beispielsweise Relais zum Einsatz, welche den Motorstrom schalten. Alternativ können elektronische Schalter in Form von Halbleiterschaltern vorgesehen sein, welche den Motorstrom schalten. Die letztgenannte Ausführung kann diskret aufgebaut sein oder als kompakter Baustein in Form eines sogenannten Motortreibers vorliegen. Als Halbleiterschalter können bevorzugt MOSFET (metal-oxide semiconductor field effect transistor) Transistoren eingesetzt werden. Diese zeichnen sich durch geringe Spannungsverluste in einem Einschaltzustand aus, wodurch Verluste und eine damit einhergehende Wärmeerzeugung in der Motorsteuerung vermindert werden. Zudem zeigt die Schaltstrecke (source-drain-Strecke) eines MOSFETs im eingeschalteten Zustand das Verhalten eines ohmschen Widerstands, was ermöglicht, die Schaltstrecke selbst als Shunt zur Messung des Motorstroms einzusetzen. Alternativ kann der Motorstrom mithilfe eines externen Strommesssensors, z.B. eines externen Shunts oder eines Hall-Sensors gemessen werden. Diese Art der Strommessung bietet sich auch an, wenn die Motorsteuerung andere Schalter als die genannten MOSFETs nutzt. Als solche anderen Schalter kommen z.B. Relais, ggf. in Kombination mit manuell schaltenden Tastern in Frage.

Bei Verwendung eines Motortreibers, d.h. eines integrierten Bausteins, der die Funktion der Motorsteuerung umfasst, kann dieser selbst eine Auswertung und Verarbeitung der eingangs genannten wechselnden beziehungsweise schwellenden Signale erzeugt durch die Gegen-EMK des Motors aufweisen. Ferner kann die Auswertung und Verarbeitung derart erfolgen, dass an einem Signalausgang des Motortreibers ein elektrisches Signal vorliegt, welches der Drehzahl des Motors entspricht. Dieses Signal kann in Form einer veränderbaren Frequenz oder in Form einer veränderbaren Spannung vorliegen.

Ferner ist die Steuereinheit bevorzugt mit einem Mikrocontroller ausgestattet, auf dem ein lauffähiges Programm abläuft. Das Programm ist dazu ausgelegt, den oder die eingangs genannten Schwellenwerte aufzunehmen, den eingangs genannten Soll-Ist-Vergleich durchzuführen und den jeweiligen Motor ereignisorientiert zumindest auszuschalten.

Das Ereignis einer Kollision bzw. eines Einklemmfalls ist dadurch gekennzeichnet, dass die Drehzahl des Motors innerhalb einer vorbestimmten Zeitspanne sich um mehr als einen zuvor festgelegten Schwellenwert reduziert. Dieses wird erfindungsgemäß anhand der zur Drehzahl des Motors proportionalen Frequenz des Gegen-EMK-Signals des Motors erkannt. Um eine robuste und störungsunanfällige Bestimmung der Frequenz des Gegen-EMK-Signals durchzuführen, wird vorteilhaft eine Mittelung über einen aktuellen Wert der Frequenz durchgeführt. Bevorzugt erfolgt die Mittelung als gleitender Mittelwert über ein Zeitfenster festgelegter Breite.

Die Erfindung wird nachfolgend anhand von Ausführungsbeispielen und Figu-ren näher erläutert. Die Figuren zeigen:

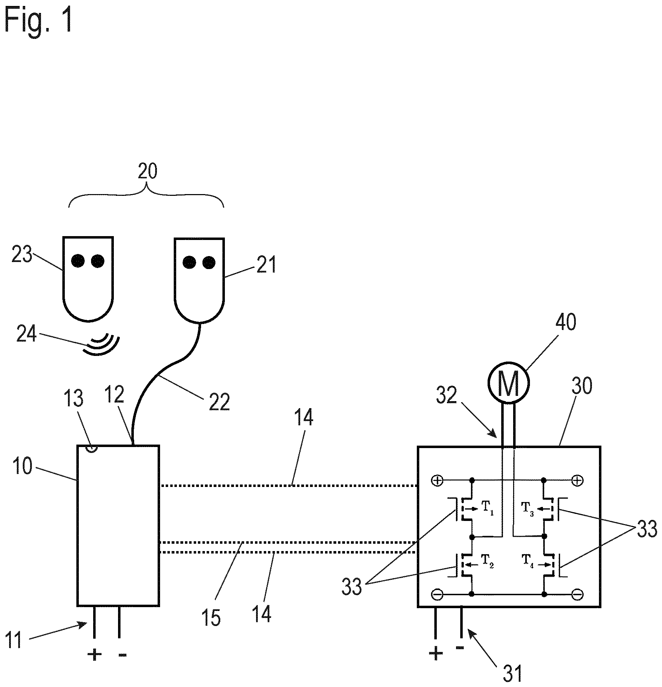

- Fig. 1-3: jeweils eine schematische Darstellung eines elektromotorischen Möbelantriebs in jeweils einem Blockschaltbild.

In Fig. 1 ist ein erstes Ausführungsbeispiel eines elektromotorischen Möbelantriebs schematisch dargestellt. Die Darstellung erfolgt in Form eines Blockschaltbildes, ohne Bezug zu einem Möbel, in dem der Möbelantrieb eingebaut ist. Im Möbel dient der Möbelantrieb zur Verstellung von mindestens einem Möbelbauteil. Das Möbel kann beispielsweise ein Sitz- oder Liegemöbel sein.

Der Möbelantrieb weist eine Steuereinheit 10 auf, die mit zumindest einer Bedieneinheit 20 gekoppelt ist. Beispielhaft sind zwei verschiedene Bedieneinheiten 20 dargestellt: eine drahtgebundene Bedieneinheit 21, die über ein Anschlusskabel 22 mit der Steuereinheit 10 verbunden ist, und eine drahtlose Bedieneinheit 23, die über eine Funkstrecke mit der Steuereinheit 10 verbunden ist. Die Funkstrecke ist anhand eines Funksignals 24 in der Fig. 1 symbolisiert.

Je nach Ausgestaltung der Steuereinheit 10 kann vorgesehen sein, dass nur die drahtgebundene Bedieneinheit 21 oder nur die drahtlose Bedieneinheit 23 eingesetzt werden können. In alternativen Ausgestaltungen können auch wahlweise die drahtgebundene bzw. drahtlose Bedieneinheit 21, 23 eingesetzt werden oder beide parallel. Die drahtlose Bedieneinheit 23 kann speziell für diesen Zweck hergestellt sein. Es kann alternativ auch vorgesehen sein, ein mobiles Endgerät, beispielsweise ein Smartphone, mit einer entsprechenden Software als drahtlose Bedieneinheit 23 einzusetzen.

Die Steuereinheit 10 weist einen Versorgungsspannungsanschluss 11 auf, über den sie mit Betriebsstrom versorgt wird. Weiter kann ein Anschluss 12 für die drahtgebundene Bedieneinheit 21 und/oder ein Empfänger 13 für das Funksignals 24 der drahtlosen Bedieneinheit 23 vorhanden sein.

Zudem ist die Steuereinheit 10 über Steuerleitungen 14 mit einer Motorsteuerung 30 verbunden, die einen Motor 40 ansteuert. Der Motor 40 ist der Motor eines Verstellantriebs zur Verstellung des zuvor genannten Möbelbauteils relativ zu einem Grundgestell des Möbels oder relativ zu einem weiteren, ggf. ebenfalls verstellbaren Möbelbauteil. Als Motor 40 wird ein bürstenbehafteter Gleichstrommotor eingesetzt.

Innerhalb eines Möbels können mehrere Verstellantriebe eingesetzt werden, wobei die Steuereinheit 10 bevorzugt gemeinsam für alle vorhandenen Verstellantriebe genutzt wird, wohingegen für jeden Verstellantrieb eine Motorsteuerung 30 vorhanden ist.

Die Motorsteuerung 30 weist einen Versorgungsspannungsanschluss 31 auf, der, ebenso wie der Versorgungsspannungsanschluss 11 der Steuereinheit 10, mit einem Netzteil zur Versorgung des Möbelantriebs verbunden ist. Dieses Netzteil ist vorliegend nicht dargestellt. Es kann mit einer oder beiden der beschriebenen Einheiten, d. h. der Steuereinheit 10 und/oder der Motorsteuerung 30, in einer Baueinheit ausgeführt sein. Alternativ ist denkbar, das Netzteil separat auszubilden und mit der Motorsteuerung 30 bzw. der Steuereinheit 10 zu koppeln. Das Netzteil gibt bevorzugt eine Kleinst-Gleichspannung, beispielsweise im Bereich von etwa 24-32 Volt, an seinen Ausgängen aus, die der Steuereinheit 10 und der Motorsteuerung 30 als Versorgungsspannung zugeführt wird.

In der Motorsteuerung 30 sind Schaltorgane 33 angeordnet, die ein Ein- und Ausschalten des Motors 40 sowie eine Richtungsauswahl ermöglichen. Als Schaltorgane 33 sind in der Fig. 1 Halbleiterschalter, vorliegend MOSFETs (metal-oxide semiconductor field-effect transistors) vorgesehen. Diese sind in Art einer H-Brücke angeordnet, die eine Drehrichtungsumkehr des Motors 40 erlaubt. Die Schaltorgane 33 können pulsweitenmoduliert angesteuert werden, um eine Motordrehgeschwindigkeit bzw. ein Motordrehmoment zu beeinflussen und so z. B. einen sanften Anlauf des Motors 40 erlauben.

Im Betrieb des elektromotorischen Möbelantriebs werden Bedieneingaben eines Benutzers an einer der Bedieneinheiten 20 von der Steuereinheit 10 ausgewertet und in Steuersignale auf den Steuerleitungen 14 umgewandelt, die entsprechend der Bedienung des Benutzers die Motorsteuerung 30 ansteuern. Innerhalb der Motorsteuerung 30 erfolgt eine Messung des vom Motor 30 aufgenommenen Stroms. Eine den gemessenen Motorstrom widerspiegelnde Information wird über eine Strommessleitung 15 von der Motorsteuerung 30 zurück an die Steuereinheit 10 geführt. Dieses kann in Form eines Analogsignals oder auch in Form von digitalen Daten erfolgen.

Wie nachfolgend noch genauer erläutert wird, erfolgt innerhalb der Steuereinheit 10 eine Auswertung der Signale bzw. Daten der Strommessleitung 15, um eine Kollision und/oder einen Einklemmfall zu erkennen. Als Folge einer erkannten Kollision bzw. eines Einklemmfalls kann die Motorsteuerung 30 von der Steuereinheit 10 so angesteuert werden, dass der Motor 40 seine Bewegung stoppt oder kurzzeitig seine Drehrichtung ändert und dann stoppt, um einen möglichen Einklemmfall wiederaufzulösen.

Beim Ausführungsbeispiel der Fig. 1, bei dem MOSFETs als Schaltorgane 33 eingesetzt werden, kann ein Spannungsabfall an den Schaltorganen 33 als Maß für den Motorstrom ausgewertet werden. Alternativ ist auch denkbar, dass ein zusätzlicher Strommesssensor vorhanden ist, beispielsweise ein Hall-Sensor oder ein Shunt, über den der Motorstrom bestimmt wird.

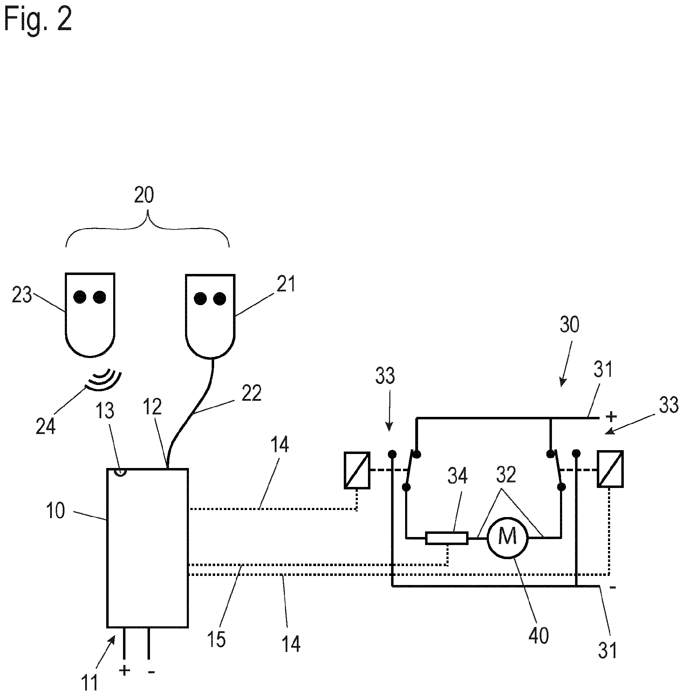

Fig. 2 zeigt in gleicher Art wie Fig. 1 eine alternative Ausgestaltung eines elektromotorischen Möbelantriebs. Bezüglich des grundsätzlichen Aufbaus wird auf das Ausführungsbeispiel der Fig. 1 verwiesen. Nachfolgend sind die Unterschiede zu diesem ersten Ausführungsbeispiel aufgezeigt.

Anders als beim Ausführungsbeispiel der Fig. 1 sind bei der Motorsteuerung 30 gemäß Fig. 2 als Schaltorgane 33 Relais mit entsprechenden Schaltkontakten anstelle der MOSFETs der Fig. 1 eingesetzt. Bis auf die Möglichkeit, eine pulsweitenmodulierte Ansteuerung des Motors 40 vorzunehmen, ist die Funktion der Relais als Schaltorgane 33 analog zu der der H-Brücke mit den MOSFETs beim ersten Ausführungsbeispiel. In der Fig. 2 ist eine Ruhestellung beider Relais dargestellt, die eingenommen wird, wenn keine Betätigung an einer der Bedieneinheiten 20 erfolgt. In dieser Ruhestellung ist der Motor 40 kurzgeschlossen, was ihn generatorisch bremst.

Zur Messung des Stroms des Motors 40 ist hier ein separater Strommesssensor 34 vorgesehen, der in einer Reihenschaltung mit dem Motor 40 angeordnet ist. Wie bereits im Zusammenhang mit Fig. 1, bei der diese Art der Strommessung als eine Alternative genannt wurde, erwähnt wurde, kann der Strommesssensor 34 ein Shunt- oder ein Hall-Sensor sein.

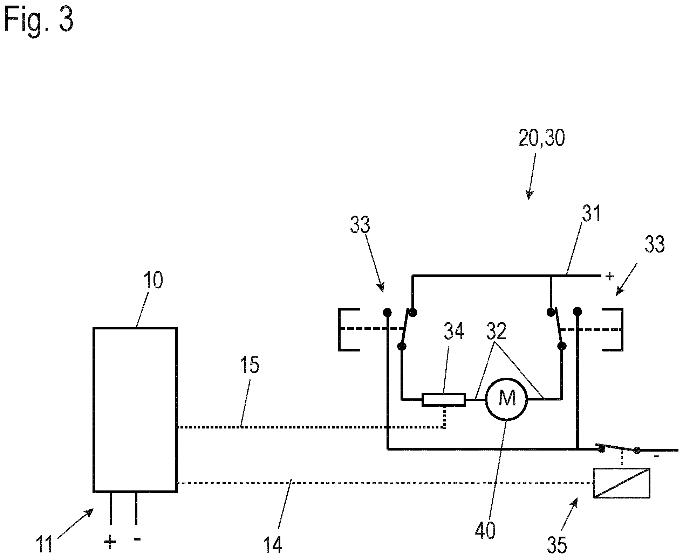

Fig. 3 schließlich zeigt ein drittes mögliches Ausführungsbeispiel eines elektromotorischen Möbelantriebs.

Im Unterschied zu den zuvor beschriebenen Ausführungsbeispielen ist hier die Motorsteuerung 30 und eine Bedieneinheit 20 integriert ausgebildet, indem Schaltorgane 33, die den Motorstrom schalten, manuell zu betätigende Tastschalter sind, die somit unmittelbar die Schalter der Bedieneinheit 20 bilden. Bei manueller Betätigung einer der beiden Schaltorgane 33 wird der Motor in jeweils einer unterschiedlichen Drehrichtung eingeschaltet.

Wiederum ist ein Strommesssensor 34 vorgesehen, um eine Strommessung vorzunehmen und den gemessenen Motorstrom über die Strommessleitung 15 der Steuereinheit 10 zur Auswertung bereitzustellen.

Die Steuereinheit 10 weist bei diesem Ausführungsbeispiel entsprechend keine Anschlussmöglichkeiten für eine separate Bedieneinheit 20 auf. Um im Falle einer detektierten Kollision oder eines Einklemmfalls den Motor 40 stoppen zu können, ist ein übergeordnetes Schaltorgan 35 bei der Motorsteuerung 30 vorhanden, das eine Versorgungsspannung für den Elektromotor 40 unterbrechen kann. Das übergeordnete Schaltorgan 35 ist hier beispielhaft als ein Relais mit Ruhekontakt ausgebildet.

Bei allen drei dargestellten Ausführungsbeispielen erfolgt in der Steuereinheit 10 während des Betriebs des Elektromotors 40 eine Überwachung des Signals bzw. der Daten am Strommessanschluss 15, um eine Kollision und/oder einen Einklemmfall zu detektieren. Wenn der Motor ein bürstenbehafteter Gleichstrommotor ist, ist bei Drehung des Motors einem Gleichstromanteil ein Wechselsignal überlagert, das von der Kommutation des Motors herrührt und auch als Gegen-EMK (elektromotorische Kraft)-Signal bezeichnet wird. Die Frequenz des Gegen-EMK-Signals ist proportional zu einer Drehzahl des Motors.

Anmeldungsgemäß wird nun die Frequenz dieses Signals und damit eine zur Drehzahl des Motors proportionale Frequenz genutzt, um eine Kollision oder einen Einklemmfall zu erkennen. Dazu kann beispielsweise eine Grenzfrequenz als Schwellenwert vorgegeben sein, deren Unterschreitung auf eine Kollision oder einen Einklemmfall schließen lässt. Weiter kann eine Änderungsrate der Frequenz beobachtet werden. Wenn die Frequenz sich während des Betriebs mit einer Rate ändert, deren Wert einen weiteren vorgegebenen Schwellenwert übersteigt, deutet auch dieses auf eine Kollision oder einen Einklemmfall hin.

In einer Weiterbildung kann vorgesehen sein, dass der Schwellenwert für die Frequenz nicht fest vorgegeben ist, sondern in einer oder mehreren Lernfahrten ermittelt wird. Dazu wird in einer Lernphase der Verstellantrieb über den gesamten Verfahrbereich betätigt und die Frequenz des Gegen-EMK-Signals gemessen. Es kann dann ein Mindestfrequenzwert erfasst werden, der während der gesamten Lernphase, also an jeder Position innerhalb des gesamten Verfahrwegs des Verstellantriebs, überschritten wird. Von diesem Mindestfrequenzwert, der im Normalfall, also ohne Kollision bzw. nicht im Einklemmfall, erreicht wird, wird ein Toleranzanteil, beispielsweise 20% abgezogen, um den Schwellenwert zu bilden. Wird im Betrieb dieser Schwellenwert unterschritten, deutet das auf eine Kollision oder einen Einklemmfall hin.

Der Schwellenwert kann, unabhängig davon, ob er fest vorgegeben ist oder in einer Lernfahrt erfasst wird, über den gesamten Verfahrweg des elektromotorischen Möbelantriebs gleich sein. Es kann aber auch vorgesehen sein, dass dieser Schwellenwert abschnittsweise über den Verfahrweg definiert ist. Dazu kann der Verfahrweg in mindestens zwei, ggf. mehrere oder viele Abschnitte unterteilt sein, in denen jeweils ein eigener Schwellenwert vorgegeben oder in einer Lernphase ermittelt wird. Dieses trägt dann dem Umstand Rechnung, dass bestimmte Bewegungsabschnitte des Verfahrwegs aufgrund der Hebelkinematik eines Möbelbeschlags, der von dem elektromotorischen Möbelantrieb bewegt wird, unterschiedlich starken Belastungen ausgesetzt ist, wodurch sich auch im normalen Betrieb, d. h. ohne Kollision und ohne Einklemmfall, eine unterschiedliche Drehgeschwindigkeit des Motors und damit Frequenz der Gegen-EMK ergibt. Bei dieser Ausgestaltung ist Kenntnis über die aktuelle Position des Verstellantriebs notwendig. Diese kann z.B. ausgehend von einer Endschalterbetätigung ebenfalls mithilfe der Gegen-EMK erfasst werden, indem Pulse des Gegen-EMK-Signals gezählt werden. Die Anzahl der gezählten Pulse ist dann ein Maß für die aktuelle Position des Verstellantriebs, mit deren Hilfe dann der positionsabhängige Schwellenwert abgerufen werden kann bzw. während einer Lernphase bestimmt werden kann.

### Bezugszeichenliste

- 10: Steuereinheit
- 11: Versorgungsspannungsanschluss
- 12: Handschalteranschluss
- 13: Empfänger
- 14: Steuerleitung
- 15: Strommessanschluss

- 20: Bedieneinheit (Handschalter)
- 21: drahtgebundene Bedieneinheit
- 22: Anschlusskabel
- 23: drahtlose Bedieneinheit
- 24: Funksignal

- 30: Motorsteuerung
- 31: Versorgungsspannungsanschluss
- 32: Motoranschluss
- 33: Schaltorgan
- 34: Strommesssensor
- 35: übergeordnetes Schaltorgan

- 40: Motor

## Patentansprüche

1. Elektromotorischer Möbelantrieb mit wenigstens einem motorischen Verstellantrieb zur motorischen Verstellung von wenigstens einem Möbelbauteil, wenigstens einer Steuereinheit (10), die mit einer Motorsteuerung (30) des wenigstens einen Verstellantriebs verbunden ist, und wenigstens einer Bedieneinheit (20) zur Bedienung des wenigstens einen Verstellantriebs, wobei die Steuereinheit (10) abhängig von der Betriebssituation des elektromotorischen Möbelantriebs zum Ansteuern, zum Stillsetzen und/oder zum zeitweise Umkehren mindestens eines Motors (40) des wenigstens einen Verstellantriebs über die Motorsteuerung (30) ausgelegt ist, wobei der mindestens eine Motor (40) als bürstenbehafteter Gleichstrommotor ausgebildet ist, **dadurch gekennzeichnet, dass**
die Steuereinheit (10) dazu ausgebildet ist, eine Frequenz eines von dem mindestens einen Motor (40) erzeugten Gegen-EMK-Signals auszuwerten und in Abhängigkeit des ausgewerteten Signals eine Kollision und/oder einen Einklemmfall zu erkennen und zu signalisieren, wobei die Kollision und/oder der Einklemmfall erkannt werden, wenn die ermittelte Frequenz des Signals einen vorgegebenen Schwellenwert unterschreitet und/oder wenn ein Absolutwert einer Änderung der Frequenz einen weiteren vorgegebenen Schwellenwert überschreitet.

2. Elektromotorischer Möbelantrieb nach Anspruch 1, bei dem die Steuereinheit (10) dazu ausgebildet ist, nach einem Erkennen der Kollision und/oder des Einklemmfalls den mindestens einen Motor (40) abzuschalten und/oder seine Drehrichtung umzukehren.

3. Elektromotorischer Möbelantrieb nach Anspruch 1 oder 2, bei dem der Schwellenwert und/oder der weitere Schwellenwert fest vorgegeben sind.

4. Elektromotorischer Möbelantrieb nach Anspruch 1 oder 2, bei dem der Schwellenwert und/oder der weitere Schwellenwert in einer Lernphase, in der der der wenigstens eine Verstellantrieb ohne Kollision und/oder einen Einklemmfall verfahren wird, ermittelt werden.

5. Elektromotorischer Möbelantrieb nach einem der Ansprüche 1 bis 4, bei dem der Schwellenwert und/oder der weitere Schwellenwert über den gesamten Verfahrweg des wenigstens einen Verstellantriebs konstant ist.

6. Elektromotorischer Möbelantrieb nach einem der Ansprüche 1 bis 4, bei dem der Schwellenwert und/oder der weitere Schwellenwert in unterschiedlichen Abschnitten des Verfahrweg des wenigstens einen Verstellantriebs unterschiedlich ist.

7. Elektromotorischer Möbelantrieb nach einem der Ansprüche 1 bis 6, bei dem der Schwellenwert und/oder der weitere Schwellenwert situationsbezogen variiert werden.

8. Elektromotorischer Möbelantrieb nach einem der Ansprüche 1 bis 7, bei dem das Gegen-EMK-Signal anhand einer Messung eines Betriebsstroms des mindestens einen Motors (40) gewonnen wird.

9. Elektromotorischer Möbelantrieb nach Anspruch 8, bei dem ein Strommesssensor (34) in Form eines Shunts oder eines Hall-Sensors vorhanden ist.

10. Elektromotorischer Möbelantrieb nach einem der Ansprüche 1 bis 9, bei dem die Motorsteuerung (30) MOSFET-Transistoren als Schaltorgane aufweist.

11. Elektromotorischer Möbelantrieb nach Anspruch 9 und 10, bei dem eine Drain-Source Schaltstrecke eines der MOSFET-Transistoren als Strommesssensor (34) genutzt wird.

## Claims

1. Electromotive furniture drive having at least one motorized adjustment drive for motorized adjustment of at least one furniture component, at least one control unit (10) which is connected to a motor controller (30) of the at least one adjustment drive, and at least one operating unit (20) for operating the at least one adjustment drive, the control unit (10) being designed, as a function of the operating situation of the electromotive furniture drive, for actuating, for stopping and/or for temporarily reversing at least one motor (40) of the at least one adjusting drive via the motor control (30), the at least one motor (40) being designed as a brush-loaded DC motor, **characterized in that** the control unit (10) is designed to evaluate a frequency of a counter-EMF signal generated by the at least one motor (40) and to detect and signal a collision and/or a jamming case as a function of the evaluated signal, wherein the collision and/or the jamming case are detected when the determined frequency of the signal falls below a predetermined threshold value and/or when an absolute value of a change in frequency exceeds a further predetermined threshold value.

2. Electromotive furniture drive according to claim 1, in which the control unit (10) is designed to switch off the at least one motor (40) and/or reverse its direction of rotation after detection of the collision and/or the jamming case.

3. Electromotive furniture drive according to claim 1 or 2, in which the threshold value and/or the further threshold value are fixedly predetermined.

4. Electromotive furniture drive according to claim 1 or 2, in which the threshold value and/or the further threshold value are determined in a learning phase in which the at least one adjusting drive is moved without collision and/or a jamming case.

5. Electromotive furniture drive according to any one of claims 1 to 4, wherein the threshold value and/or the further threshold value is constant over the entire travel distance of the at least one adjustment drive.

6. Electromotive furniture drive according to any one of claims 1 to 4, wherein the threshold value and/or the further threshold value is different in different sections of the travel path of the at least one adjustment drive.

7. Electromotive furniture drive according to any one of claims 1 to 6, wherein the threshold value and/or the further threshold value are varied according to the situation.

8. Electromotive furniture drive of any one of claims 1 to 7, wherein the counter-EMF signal is obtained based on a measurement of an operating current of the at least one motor (40).

9. Electromotive furniture drive of claim 8, wherein a current measurement sensor (34) is provided in the form of a shunt or a Hall sensor.

10. Electromotive furniture drive according to any one of claims 1 to 9, wherein the motor controller (30) comprises MOSFET transistors as switching elements.

11. Electromotive furniture drive of claims 9 and 10, wherein a drain-source switching path of one of the MOSFET transistors is used as a current measurement sensor (34).

## Revendications

1. Entraînement de meuble à moteur électrique comprenant au moins un entraînement de réglage motorisé pour le réglage motorisé d'au moins un élément de meuble, au moins une unité de commande (10) qui est reliée à une commande de moteur (30) dudit au moins un entraînement de réglage, et au moins une unité de manoeuvre (20) pour la manoeuvre dudit au moins un entraînement de réglage, l'unité de commande (10) étant conçue, en fonction de la situation de fonctionnement de l'entraînement de meuble à moteur électrique, pour activer, pour arrêter et/ou pour inverser temporairement au moins un moteur (40) dudit au moins un entraînement de réglage par l'intermédiaire de la commande de moteur (30), ledit au moins un moteur (40) étant réalisé sous la forme d'un moteur à courant continu à balais,
**caractérisé en ce que**
l'unité de commande (10) est conçue pour évaluer une fréquence d'un signal de force contre-électromotrice généré par ledit au moins un moteur (40) et pour détecter et signaler une collision et/ou un cas de coincement en fonction du signal évalué, la collision et/ou le cas de coincement étant détectés lorsque la fréquence déterminée du signal est inférieure à une valeur seuil prédéfinie et/ou lorsqu'une valeur absolue d'une variation de la fréquence est supérieure à une autre valeur seuil prédéfinie.

2. Entraînement de meuble à moteur électrique selon la revendication 1, dans lequel l'unité de commande (10) est conçue pour arrêter ledit au moins un moteur (40) et/ou inverser son sens de rotation après une détection de la collision et/ou du cas de coincement.

3. Entraînement de meuble à moteur électrique selon la revendication 1 ou 2, dans lequel la valeur seuil et/ou l'autre valeur seuil sont prédéfinies de manière fixe.

4. Entraînement de meuble à moteur électrique selon la revendication 1 ou 2, dans lequel la valeur seuil et/ou l'autre valeur seuil sont déterminées au cours d'une phase d'apprentissage pendant laquelle ledit au moins un entraînement de réglage est déplacé sans collision et/ou sans cas de coincement.

5. Entraînement de meuble à moteur électrique selon l'une des revendications 1 à 4, dans lequel la valeur seuil et/ou l'autre valeur seuil est constante sur toute la course de déplacement dudit au moins un entraînement de réglage.

6. Entraînement de meuble à moteur électrique selon l'une des revendications 1 à 4, dans lequel la valeur seuil et/ou l'autre valeur seuil est différente dans différentes sections de la course de déplacement dudit au moins un entraînement de réglage.

7. Entraînement de meuble à moteur électrique selon l'une des revendications 1 à 6, dans lequel la valeur seuil et/ou l'autre valeur seuil varient en fonction de la situation.

8. Entraînement de meuble à moteur électrique selon l'une des revendications 1 à 7, dans lequel le signal de force contre-électromotrice est obtenu à l'aide d'une mesure d'un courant de fonctionnement dudit au moins un moteur (40).

9. Entraînement de meuble à moteur électrique selon la revendication 8, dans lequel il existe un capteur de mesure de courant (34) sous la forme d'un shunt ou d'un capteur à effet Hall.

10. Entraînement de meuble à moteur électrique selon l'une des revendications 1 à 9, dans lequel la commande de moteur (30) présente des transistors MOSFET comme organes de commutation.

11. Entraînement de meuble à moteur électrique selon les revendications 9 et 10, dans lequel un circuit de commutation drain-source d'un des transistors MOSFET est utilisé comme capteur de mesure de courant (34).
